# EUROPÄISCHE PATENTANMELDUNG

(11) **EP 2 431 934 A2**
(43) Veröffentlichungstag der Anmeldung: **21.03.2012**
(21) Anmeldenummer: 11182266.4
(22) Anmeldetag: 21.09.2011
(51) Int. Cl.: G06Q 30/00

(54) **Verfahren zur Steuerung und Verwaltung der Akzeptanzstellen von elektronischen Gutscheinen oder Coupons für die Einlösung**

(30) Priorität: 21.09.2010 DE 102010037696; 20.09.2011 DE 102011053806
(71) Anmelder: Reif, Andre, 01277 Dresden (DE)
(72) Erfinder: Reif, Andre, 01277 Dresden (DE)
(74) Vertreter: Weissfloh, Ingo

(57) **Zusammenfassung**

Aufgabe der Erfindung ist es, ein Verfahren zur Steuerung und Verwaltung der Akzeptanzstellen von elektronischen Gutscheinen oder Coupons für die Einlösung, insbesondere nach geografischen oder kaufmännischen Bedingungen zum gezielten Einlösen des Gutscheines oder Coupons zu schaffen.

Mit dem Verfahren werden elektronische Gutscheine oder Coupons vom Anbieter im Handel oder in der Industrie mit Merkmalen versehen, welche das gezielte Einlösen nach bestimmten Kriterien ermöglichen. Gleichzeitig werden Reporting-Daten erfasst.

Das Anwendungsgebiet der Erfindung liegt im Online Couponing, Mobile Couponing bzw. Online-Marketing.

## Beschreibung

Verfahren zur Steuerung und Verwaltung der +Akzeptanzstellen von elektronischen Gutscheinen oder Coupons für die Einlösung insbesondere nach geografischen oder kaufmännischen Bedingungen zum gezielten Einlösen des Gutscheines.

Aus dem Stand der Technik sind bereits verschiedene Lösungen zur Bereitstellung und Verwaltung von elektronischen Gutscheinen bzw. Coupons bekannt.

Die DE 10 2005 007 928 A1 beschreibt beispielsweise ein System zur individuellen, kassenintegrierten, dass heißt vom Kaufverhalten des Kunden abhängigen und vollautomatisierten Prüfung von Voraussetzungen für die Ausgabe eines Rabattcoupons mit anschließendem Ausdruck des elektronisch einlösbaren Coupons über einen Bondrucker der Kasse im Einzelhandel. Hierbei wird über ein in die vorhandene Kasse des Händlers zu integrierendes Modul die Voraussetzung für die Ausgabe von Coupons veränderbar festgelegt und diese mit den über die Kasse eingegebenen Waren- und Kundeninformationen abgeglichen, wobei die Verarbeitung komplett über das Kassensystem und bei Erfüllung der Bedingungen die Ausgabe der Coupons vollautomatisch über den Drucker der Kasse erfolgt.

Die DE 698 02 797 T2 beschreibt ein System zur Verteilung von Produktanreizen an Verbraucher über ein Kommunikationsnetzwerk.

Die DE 698 03 675 T2 beschreibt eine Vorrichtung zur automatischen Ausgabe von kommerziellen Rabattmarken bei der Passage von Kunden an den Kassen eines Ladens zum Registrieren und Abrechnen des Kaufs von Waren, wobei wenigstens ein Informationssystem als Steuerserver alle Kassen des Ladens steuert.

In der DE 20 2009 000 266 U1 wird eine Anordnung beschrieben, welche aus einem Anzeigegerät mit einer Empfangs- und Sendeeinrichtung besteht, wobei Identifikationsmerkmale aus einer Zentrale abrufbar sind und diese für Bezahlvorgänge und andere Identifizierungen nutzbar sind.

Aufgabe der Erfindung ist es, ein Verfahren zur Steuerung und Verwaltung der Akzeptanzstellen von elektronischen Gutscheinen oder Coupons für die Einlösung, insbesondere nach geografischen oder kaufmännischen Bedingungen zum gezielten Einlösen des Gutscheines oder Coupons zu schaffen.

Mit der Erfindung wird im angegebenen Anwendungsfall erreicht, dass ein Verfahren zur Steuerung und Verwaltung der Akzeptanzstellen von elektronischen Gutscheinen oder Coupons für das gezielte Einlösen des Gutscheines oder Coupons geschaffen wird, wobei den auf einer Datenverarbeitungsanlage nach einem an sich bekannten Verfahren bereitgestellten elektronischen Gutscheine oder Coupons für mobile Endgeräte ein Anbieter einer Bestandsübersicht der elektronischen Gutscheine Merkmale vergibt und die Bestandsübersicht von der Datenverarbeitungsanlage an eine zentrale Akzeptanzdatenverarbeitungsanlage übertragen werden. Von der zentralen Akzeptanzdatenverarbeitungsanlage wird in Abhängigkeit der Merkmale die Bestandsübersicht auf dezentrale Akzeptanzdatenverarbeitungsanlagen übertragen. An den dezentralen Akzeptanzdatenverarbeitungsanlagen werden die elektronischen Gutscheine oder Coupons mittels des mobilen Endgerätes und der Akzeptanzdatenverarbeitungsanlage eingelöst und in der Bestandsübersicht auf der zentralen Akzeptanzdatenverarbeitungsanlage abgeglichen und mit geänderten Merkmalen der Datenverarbeitungsanlage zur Verfügung gestellt. Hierdurch ist eine individuelle Steuerung der Einlösung der elektronischen Gutscheine oder Coupons möglich. Die Akzeptanzstellen der Gutschiene oder Coupons können somit gezielt einen Nutzerkreis erreichen, welcher sich in der Nähe der Akzeptanzstellen aufhält oder gezielt zu einem bestimmten besonders beworbenen Bereich geführt wird. Somit lassen sich Werbemaßnahmen gezielter und effizienter durchführen. Zusätzlich ist es möglich, durch den Datenabgleich kurzfristig Auswertungen zum Erfolg einer Werbemaßnahme zu erlangen.

Vorteilhafte Ausgestaltungen der Erfindung sind in den Ansprüchen 2 bis 6 dargestellt.

Nach Anspruch 2 wird die Statusänderung des Einlösens der Gutscheine oder Coupons gesammelt und als Bestandsübersicht übertragen. Hierdurch vereinfacht sich das Verfahren. Weiterhin lassen sich Fehler auf ein sehr geringes Maß reduzieren.

Das Verfahren erfährt nach Anspruch 3 eine Weiterbildung durch die Wahl der Merkmale. Hierdurch lassen sich die Verwendung und Gültigkeit erfassen sowie eingrenzen.

Mit der Weiterbildung nach Anspruch 4 wird die Bestandsübersicht regelmäßig übertragen. Hierdurch werden die Bestandsdaten kontinuierlich aktualisiert und die Wahrscheinlichkeit eines Missbrauchs durch Mehrfachnutzung sinkt.

Bei der Weiterbildung nach Anspruch 5 werden die Bestandsdaten zwischengespeichert. Hierdurch stehen die Daten verschiednen Datenverarbeitungsanlagen zur Verfügung, wodurch die Ausfallsicherheit erhöht wird.

Nach Anspruch 6 erfolgt das zur Verfügung stellen der elektronischen Gutscheine gezielt nach den Vorgaben der Merkmale an die Nutzer. Hierdurch können akquirierende Maßnahmen effizienter gestaltet werden. Ein Überhäufen der Nutzer mit nicht nutzbaren Gutscheinen wird somit vermieden.

Das Verfahren wird an Hand von drei Zeichnungen dargestellt und im Folgenden näher beschrieben. Es zeigen:

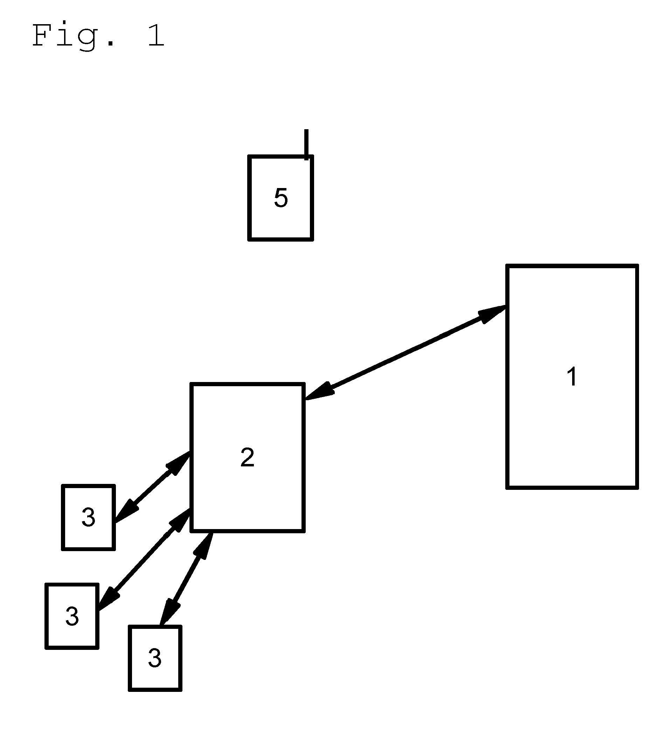

Fig. 1 eine Prinzipdarstellung des Verfahren mit einer direkten Datenverbindung zwischen der Datenverarbeitungsanlage und der zentralen Akzeptanzdatenverarbeitungsanlage,

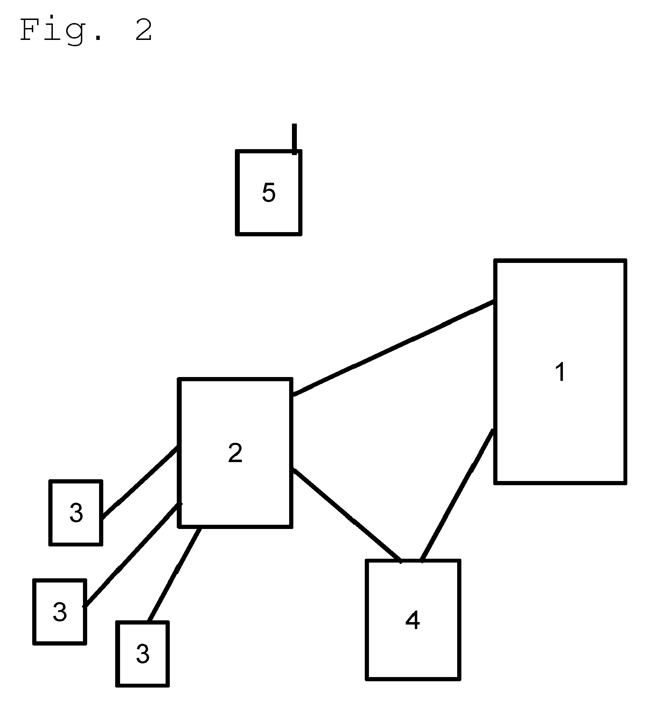

Fig. 2 eine Prinzipdarstellung des Verfahren mit einer direkten und einer indirekten Datenverbindung zwischen der Datenverarbeitungsanlage und der zentralen Akzeptanzdatenverarbeitungsanlage und

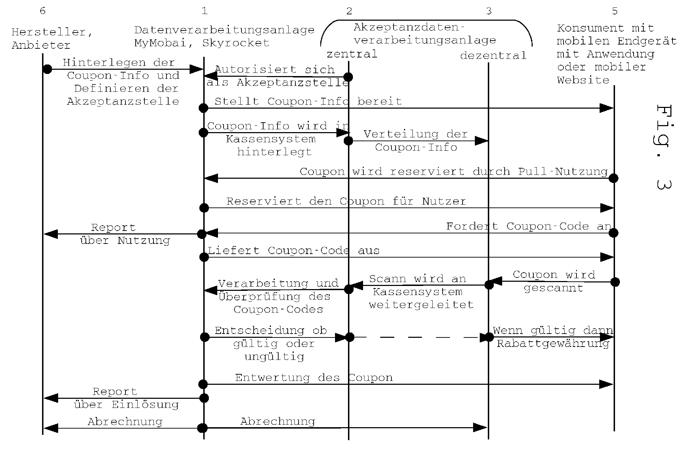

Fig. 3 ein Sequenzdiagramm.

Bei dem erfindungsgemäßen Verfahren wird als Grundlage ein an sich bekanntes Verfahren eingesetzt, bei dem Anbieter von Waren oder Dienstleistungen elektronische Gutscheine als Coupons für deren Waren und Dienstleistungen anbieten. Diese elektronischen Gutscheine werden mittels des an sich bekannten Verfahrens auf einer Datenverarbeitungsanlage 1 verwaltet und nach bestimmten Kriterien zur Benutzung an mobilen Endgeräten 5 bereitgestellt. Die elektronischen Gutscheine werden nach einer bestimmten Reglementierung einem Nutzer oder Nutzerkreis als Angebot individuell zur Verfügung gestellt.

Im erfindungsgemäßen Verfahren ist es vorgesehen, dass die entsprechend bereitgestellten elektronischen Gutscheine als Bestandsübersicht von der Datenverarbeitungsanlage 1 auf eine zentrale Akzeptanzdatenverarbeitungsanlage 2 übertragen werden. Hierfür autorisiert sich die zentrale Akzeptanzdatenverarbeitungsanlage 2 an der Datenverarbeitungsanlage 1 als mögliche Akzeptanzstelle. Hierbei werden der Bestandsübersicht für die zentrale Akzeptanzdatenverarbeitungsanlage 2 bestimmte Parameter hinzugefügt, nach welchen die Einlösung der darin hinterlegten elektronischen Gutscheine möglich ist. Bei der zentralen Akzeptanzdatenverarbeitungsanlage 2 handelt es sich beispielsweise um ein Filialkassensystem mit einem zentralen Kassenserver. Als dezentrale Akzeptanzdatenverarbeitungsanlage 3 werden hierbei die jeweils angeschlossen Kassen betrachtet, an welchen die Einlösung der elektronischen Gutscheine erfolgt. Die Bestandübersicht wird entsprechend an die dezentrale Akzeptanzdatenverarbeitungsanlage 3 verteilt. Die für die Einlösung der elektronischen Gutscheine anpassbaren Parameter sind beispielsweise eine GEO-Position, sowie ein Umkreis um eine GEO-Position sowie die Beschränkung auf bestimmte zentrale Akzeptanzdatenverarbeitungsanlagen 2 bzw. dezentrale Akzeptanzdatenverarbeitungsanlagen 3. So wäre die Einlösung eines elektronischen Gutscheins nur an einer bestimmten Kasse eines bestimmten Handelspartners an einer bestimmten Adresse oder in einer bestimmten Stadt möglich.

Die durch den Nutzer getroffene Auswahl aus den für ihn relevanten Angeboten für elektronische Gutscheine wird in der Datenverarbeitungsanlage 1 für den Nutzer reserviert und dem Nutzer bestätigt. Der hieraus abgeforderte elektronische Gutschein wird als Coupon von der Datenverarbeitungsanlage 1 an das mobile Endgerät 5 übertragen. Dieser übertragene Coupon ist hierbei codiert. Parallel wird der Anbieter bzw. Hersteller über das Interesse an dem Angebot durch die Reservierung informiert. Das Einlösen erfolgt durch Scannen des elektronischen Gutscheines bzw. Coupons an der dezentralen Akzeptanzdatenverarbeitungsanlage 3. Der Scann wird an die zentrale Akzeptanzdatenverarbeitungsanlagen 2 geleitet und von dort zur Überprüfung an die Datenverarbeitungsanlage 1 übermittelt. Das Prüfungsergebnis wird an die zentrale Akzeptanzdatenverarbeitungsanlage 2 und dezentrale Akzeptanzdatenverarbeitungsanlage 3 geleitet. War die Prüfung positiv, wird der Vorteil aus dem elektronischen Gutschein gewährt und der elektronische Gutschein als Coupon entwertet. Der Anbieter bzw. Hersteller wird nun über die Inanspruchnahme des elektronischen Gutscheines informiert. Die Hierbei ausgetauschten Daten werden unmittelbar als Datensatz übertragen. Zur Reduzierung des Datenverkehrs werden die elektronischen Gutscheine relevanten Daten in der Bestandsübersicht zusammengefasst und gesammelt übertragen. Um die direkte Verbindung zwischen der zentralen Akzeptanzdatenverarbeitungsanlage 2 und Datenverarbeitungsanlage 1 zu vermeiden, ist dieses System über einen Datenzwischenspeicher 4 verbunden. Somit werden neben sicherheitsrelevanten Aspekten auch einfach ansprechbare Schnittstellen bereitgestellt.

### Zusammenstellung der Bezugszeichen

- 1 -: Datenverarbeitungsanlage
- 2 -: zentrale Akzeptanzdatenverarbeitungsanlage
- 3 -: dezentrale Akzeptanzdatenverarbeitungsanlage
- 4 -: Datenzwischenspeicher
- 5 -: mobiles Endgerät
- 6 -: Anbieter, Hersteller

## Patentansprüche

1. Verfahren zur Steuerung und Verwaltung der Akzeptanzstellen von elektronischen Gutscheinen oder Coupons für die Einlösung, wobei auf einer an sich bekannten Datenverarbeitungsanlage (1) eines Betreibers mit einem an sich bekannten Verfahren für elektronische Gutscheine oder Coupons für mobile Endgeräte (5) die elektronischen Gutscheine oder Coupons in Form von Daten bereitgestellt sind und ein Nutzer des mobilen Endgerätes (5) mindestens einen elektronischen Gutschein oder Coupon über eine Softwareanwendung oder einer mobilen Internetseite auf sein mobiles Endgerät (5) geladen hat oder den elektronischen Gutschein oder Coupon für das Laden vorgesehen hat,
**gekennzeichnet durch** folgende Merkmale:
- dass ein Anbieter (6) mindestens eine Bestandsübersicht in Form eines Abbildes der bereitgestellten elektronischen Gutscheine oder Coupons auf die Datenverarbeitungsanlage (1) überträgt und diese Bestandsübersicht nach erfolgreicher Autorisierung einer zentralen Akzeptanzdatenverarbeitungsanlage (2) an der Datenverarbeitungsanlage (1) auf diese zentrale Akzeptanzdatenverarbeitungsanlage (2) übertragen wird, wobei den elektronischen Gutscheinen oder Coupons der Bestandsübersicht Merkmale oder Parameter zugeordnet werden,
- dass von der zentralen Akzeptanzdatenverarbeitungsanlage (2) die Bestandsübersicht in Abhängigkeit der Merkmale auf mindestens eine dezentrale
Akzeptanzdatenverarbeitungsanlagen (3) übertragen wird,
- dass die elektronischen Gutscheine oder Coupons an den dezentralen Akzeptanzdatenverarbeitungsanlagen (3) mittels des mobilen Endgerätes (5) und der dezentralen Akzeptanzdatenverarbeitungsanlage (3) eingelöst werden, wobei ein Vergleich mit der Bestandsübersicht erfolgt,
- dass die dezentrale Akzeptanzdatenverarbeitungsanlage (3) das Einlösen der elektronischen Gutscheine oder Coupons an die zentrale Akzeptanzdatenverarbeitungsanlage (2) überträgt und
- dass die zentrale Akzeptanzdatenverarbeitungsanlage (3) für jeden eingelösten elektronischen Gutschein oder Coupon einen Datensatz erstellt und der Datenverarbeitungsanlage (1) zur Verfügung stellt, wobei den eingelösten elektronischen Gutscheinen oder Coupons Merkmale oder Parameter zugeordnet werden und **durch** die
Datenverarbeitungsanlage (1) die Datensätze von der zentrale Akzeptanzdatenverarbeitungsanlage (3) abgeholt werden.

2. Verfahren nach Anspruch 1,
**dadurch gekennzeichnet,**
**dass** die zentrale Akzeptanzdatenverarbeitungsanlage (3) die eingelösten elektronischen Gutscheine oder Coupons zusammengefasst als eine geänderte Bestandsübersicht in Form eines Abbildes der eingelösten elektronischen Gutscheine oder Coupons an die Datenverarbeitungsanlage (1) überträgt, wobei der Bestandsübersicht der eingelösten elektronischen Gutscheine oder Coupons Merkmale zugeordnet werden.

3. Verfahren nach einem der vorhergehenden Ansprüche,
**dadurch gekennzeichnet,**
**dass** die Merkmale die Kennzeichnung der zentralen Akzeptanzdatenverarbeitungsanlage (2), die Kennzeichnung der dezentralen Akzeptanzdatenverarbeitungsanlage (3), eine Geo-Position, einen Umkreis um eine Geo-Position, eine Codierung, eine Nutzerkennzeichnung, einen Umsatzbetrag und/oder eine Warenbezeichnung beinhalten.

4. Verfahren nach einem der vorhergehenden Ansprüche,
**dadurch gekennzeichnet,**
**dass** die Übertragung zwischen der zentralen Akzeptanzdatenverarbeitungsanlage (2) und der Datenverarbeitungsanlage (1) mittels eines regelmäßigen und/oder unregelmäßigen Datenstromes erfolgt.

5. Verfahren nach einem der vorhergehenden Ansprüche,
**dadurch gekennzeichnet,**
**dass** die Übertragung zwischen der zentralen Akzeptanzdatenverarbeitungsanlage (2) und der Datenverarbeitungsanlage (1) in einem Datenzwischenspeicher (4) zwischengespeichert wird, wobei der Datenzwischenspeicher (4) in der zentralen Akzeptanzdatenverarbeitungsanlage (2), in der Datenverarbeitungsanlage (1) und/oder separat angeordnet ist.

6. Verfahren nach einem der vorhergehenden Ansprüche,
**dadurch gekennzeichnet,**
**dass** die Datenverarbeitungsanlage (1) die elektronischen Gutscheine oder Coupons in Abhängigkeit der Merkmale dem Nutzer des mobilen Endgerätes (5) zur Verfügung stellt, wobei die Merkmale erkennbar, nicht lesbar und/oder verschlüsselt sind.
